# EUROPEAN PATENT APPLICATION

(11) **EP 2 937 546 A1**
(43) Date of publication of application: **28.10.2015**
(21) Application number: 12890621.1
(22) Date of filing: 21.12.2012
(51) Int. Cl.: F02D 45/00, F02D 41/24, F02D 29/00

(54) **ENGINE OUTPUT DISPLAY CONTROLLER AND METHOD FOR DISPLAYING ENGINE OUTPUT MODE THEREOF**

(71) Applicant: Volvo Construction Equipment AB, 631 85 Eskilstuna (SE)
(72) Inventor: KIM, Ji-Eun, Changwon-si Gyeongsangnam-do 642-370 (KR); LEE, Myung-Hoon, Changwon-si Gyeongsangnam-do 642-370 (KR)
(74) Representative: Stöckeler, Ferdinand
(86) International application number: PCT/KR2012/011249
(87) International publication number: WO 2014/098286

(57) **Abstract**

The present invention relates to a method for displaying an engine output mode of an engine output display controller and a device thereof, the method for displaying the engine output mode of the engine output display controller which is connected to a screen display unit and controls engine output mode information set by a worker so as to display the engine output mode information on a screen through the screen display unit, comprising a step for controlling the display operation of the screen display unit such that the engine output mode information set by a worker is distinguished from the entire allowable output mode information of a corresponding engine in the case where a difference is detected between a worker set mode and an engine output mode. Before the operation of equipment of which an engine output display controller is in an idling state, the engine output mode information set by a worker is displayed on the screen separately from the entire allowable output mode information of the engine and the idling state mode information, thereby enabling workers to confirm the level of engine output in advance before the worker operates the equipment.

## Description

### TECHNICAL FIELD

The present invention relates to an engine output display controller and a method for displaying an engine output mode thereof. More particularly, the present invention relates to such an engine output display controller which can control engine output mode information set by a user to be displayed on a screen before an operator operates a work apparatus so that the operator setting engine output mode information is distinguished from the permissible overall output mode information of an engine and idling state mode information to allow the operator to previously identify an engine output level before the manipulation of the work apparatus by the operator, and a method for displaying an engine output mode thereof.

### BACKGROUND OF THE INVENTION

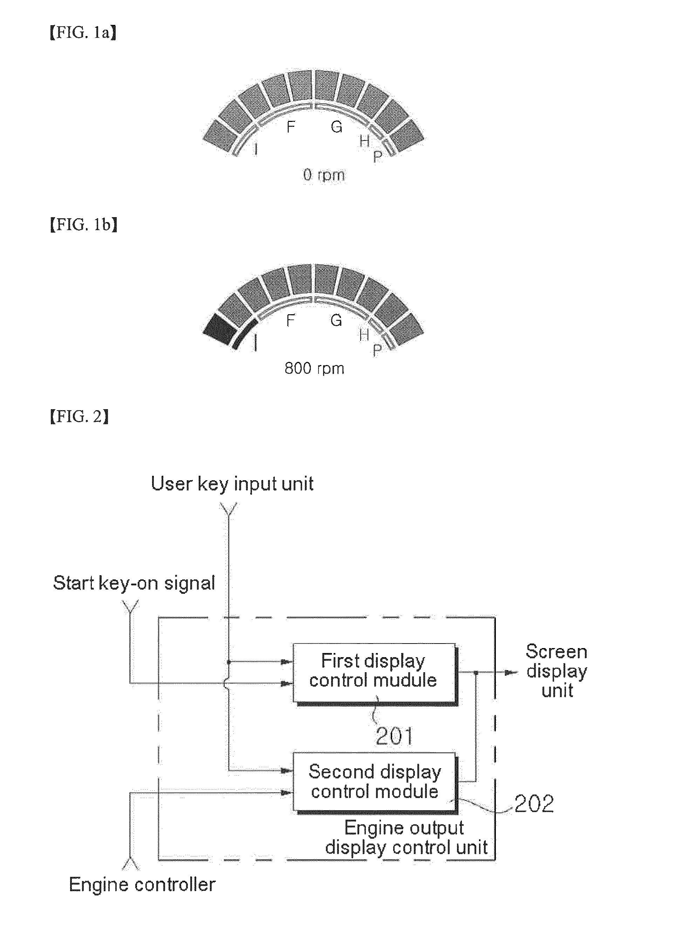

A conventional method for displaying an engine output mode of an engine output display controller is performed such that in the case where it is desired to start an engine operation, although an engine output mode adjustment switch is set to a high level, the engine has an output in an idling state and an idling mode is displayed on a screen upon the initial startup of the engine (see Fig. 1a).

Thereafter, when the operator initiates a traveling operation or an operation of a work apparatus such as an attachment, engine output mode information designated by the operator is displayed on the screen.

In addition, a construction machine has a function in which when the operator operates the engine of in a high output level and then temporarily stops the operation of the engine, the operation state of the engine is converted into an idling state to reduce fuel consumption.

In this case, when the operator re-initiates the manipulation of the work apparatus, the operation mode of the engine returns to an operator setting output mode.

However, in the case where the engine is in the idling state, because operator setting engine output mode information, i.e., engine output mode information immediately before the conversion of the operation state of the engine into the idling state is not provided to the screen (see Fig. 1b), the operator cannot identify the engine output mode information set by the operator before the re-manipulation of the work apparatus.

In other words, there occurs a problem in that the operation cannot previously identify an engine output level until the manipulation of the work apparatus is re-initiated.

Moreover, this problem is caused even in the case where the start key of the engine is turned on as shown in Fig. 1a.

### SUMMARY OF THE INVENTION

Accordingly, the present invention has been made to solve the aforementioned problems occurring in the prior art, and it is an object of the present invention to provide an engine output display controller which can control engine output mode information set by a user to be displayed on a screen before an operator operates a work apparatus that is in an idling state so that the operator setting engine output mode information is distinguished from the permissible overall output mode information of an engine and idling state mode information to allow the operator to previously identify an engine output level before the manipulation of the work apparatus by the operator, and a method for displaying an engine output mode thereof.

### TECHNICAL SOLUTION

To achieve the above object, in accordance with an embodiment of the present invention, there is provided a method for displaying an engine output mode of an engine output display controller connected to a screen display unit, the method including a step of controlling the screen display unit to display operator setting engine output mode information on a screen thereof,
wherein the controlling step controls the display operation of the screen display unit so that the operator setting engine output mode information is distinguished from permissible overall output mode information of a corresponding engine if the engine output display controller senses that an operator setting mode and an engine output mode are different from each other.

Preferably, the controlling step may further include a step of controlling the display operation of the screen display unit so that the operator setting engine output mode information is distinguished from the permissible overall output mode information of the engine and idling state mode information, if the engine output display controller receives a request for different modes in order for the engine controller to output another mode (e.g., idling mode) but not the operator setting mode to reduce fuel consumption and protect itself, without outputting the engine output mode in the same manner as the operator setting mode depending on the operator setting mode.

In addition, the engine output display controller may make a distinction between the respective modes using information regarding the number of bars which have the same shape and are differently activated for the respective modes, and position information and color information of the bars.

To achieve the above object, in accordance with another embodiment of the present invention, there is provided an engine output display controller connected to a screen display unit and configured to control the screen display unit to display operator setting engine output mode information on a screen thereof, the controller including: a first display control module configured to output first display object information, which enables the operator setting engine output mode information to be distinguished from permissible overall output mode information of a corresponding engine, to the screen display unit if the first display control module senses that an operator setting mode and an engine output mode are different from each other.

Preferably, the engine output display controller may further include a second display control module configured to output second display object information, which enables the operator setting engine output mode information to be distinguished from the permissible overall output mode information of the engine and idling state mode information, to the screen display unit upon the reception of a signal indicating the detection of a difference between an engine request mode and an operator request mode.

Moreover, the engine output display controller may make a distinction between the respective modes using information regarding the number of bars which have the same shape and are differently activated for the respective modes, and position information and color information of the bars.

### ADVANTAGEOUS EFFECT

The engine output display controller and the method for displaying an engine output mode thereof in accordance with the present invention as constructed above has the following advantages.

The engine output display controller can control engine output mode information set by a user to be displayed on a screen before an operator operates a work apparatus so that the operator setting engine output mode information is distinguished from the permissible overall output mode information of the engine and idling state mode (or output mode requested by the engine) information to allow the operator to previously identify an engine output level before the manipulation of the work apparatus by the operator.

### BRIEF DESCRIPTION OF THE DRAWINGS

The above objects, other features and advantages of the present invention will become more apparent by describing the preferred embodiments thereof with reference to the accompanying drawings, in which:
Fig. 1a is an exemplary view showing a user interface (UI) for display of an engine output mode in a start key-on state before the startup of an engine in accordance with the prior art;
Fig 1b is an exemplary view showing a user interface (UI) for display of an engine output mode in the case where the operation state of the engine is converted into an idling state in accordance with the prior art;
Fig. 2 is a block diagram showing the configuration of an engine output display controller in accordance with the present invention;
Fig. 3 is a flowchart sequentially showing the operation of the engine output display controller in accordance with the present invention;
Fig. 4a is an exemplary view showing a user interface (UI) for display of an engine output mode in a start key-on state before the startup of an engine in accordance with the present invention;
Fig. 4b is an exemplary view showing a user interface (UI) for display of an engine output mode in the case where the operation state of the engine is converted into an idling state in accordance with the present invention.

### * Explanation on reference numerals of main elements in the drawings *

201: first display control module
202: second display control module

### DETAILED DESCRIPTION OF THE INVENTION

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and through the specification, like elements are designated by like reference numerals.

In the specification and the claims, when a portion includes an element, it is meant to include other elements, but not exclude the other elements unless otherwise specifically stated herein.

Fig. 2 is a block diagram showing the configuration of an engine output display controller in accordance with the present invention.

As shown in Fig. 2, the engine output display controller in accordance with the present invention is configured to be connected to a screen display unit and control the screen display unit to display operator setting engine output mode information on a screen thereof. The engine output display controller includes a first display control module 201 and a second display control module 202.

Herein, the first display control module 201 outputs first display object information, which enables the operator setting engine output mode information to be distinguished from permissible overall output mode information of a corresponding engine, to the screen display unit if the first display control module senses that an operator setting mode and an engine output mode are different from each other. For example, a distinction between the respective modes is made using a number of bars which have the same shape. Further, when is assumed that the operator setting engine output mode is a five stage engine output mode and the permissible overall output mode of the corresponding engine is a total of ten stage engine output mode, the first display control module 201 outputs, as first display object information, information regarding the number (e.g., five) of bars which correspond to the five stage engine output mode (i.e., the operator setting engine output mode) and are to be activated, and position information (e.g., information regarding bars ranging from a first bar to a fifth bar in the right direction based on a bar positioned at the left end of the bars) and color information (e.g., colorless) of the bars, as well as information regarding the number (e.g., five) of bars which correspond to the ten stage engine output mode (i.e., the permissible overall output mode of the corresponding engine) and are to be activated, and position information (e.g., information regarding bars ranging from a sixth bar to a tenth bar in the right direction based on a bar positioned at the left end of the bars) and color information (e.g., dark red color) of the bars, to the screen display unit. In this case, matching information among the engine output stage, information regarding the number of the bars which are to be activated and the color information of the bars is previously set and stored in a memory.

The second display control module 202 outputs second display object information, which enables the operator setting engine output mode information to be distinguished from the permissible overall output mode information of the engine and idling state mode information, to the screen display unit if the second display control module, which receives the output mode information requested by the engine and a key signal requested according to an operator's key manipulation, senses that the engine output mode is different from an operator input mode (i.e., if the engine output display controller receives a request for different modes in order for the engine controller to output another mode (e.g., idling mode) but not the operator setting mode to reduce fuel consumption and protect itself, without outputting the engine output mode in the same manner as the operator setting mode depending on the operator setting mode). For example, the second display object information is set such that a distinction between the respective mode information is made by using the bars having the same shape. Further, it is assumed that the operator setting engine output mode is a five stage engine output mode, the permissible overall output mode of the corresponding engine is a total of ten stage engine output mode, and the idling state mode is a one stage engine output mode, the second display control module 204 outputs, as the second display object information, information regarding the number (e.g., five) of bars which correspond to the five stage engine output mode (i.e., the operator setting engine output mode) and are to be activated, and position information (e.g., information regarding bars ranging from a first bar to a fifth bar in the right direction based on a bar positioned at the left end of the bars) and color information (e.g., colorless) of the bars, as well as information regarding the number (e.g., ten) of bars which correspond to the ten stage engine output mode (i.e., the permissible overall output mode of the corresponding engine) and are to be activated, position information (e.g., information regarding bars ranging from a sixth bar to a tenth bar in the right direction based on a bar positioned at the left end of the bars) and color information (e.g., dark red color) of the bars, and information regarding the number (e.g., one) of bars which correspond to the one stage engine output mode (i.e., idling state mode) and are to be activated, and position information (e.g., information regarding a bar positioned at the left end of the bars) and color information (e.g., dark red color) of the bars, to the screen display unit. In this case, matching information among the engine output stage, information regarding the number of the bars which are to be activated and the color information of the bars is previously set and stored in a memory.

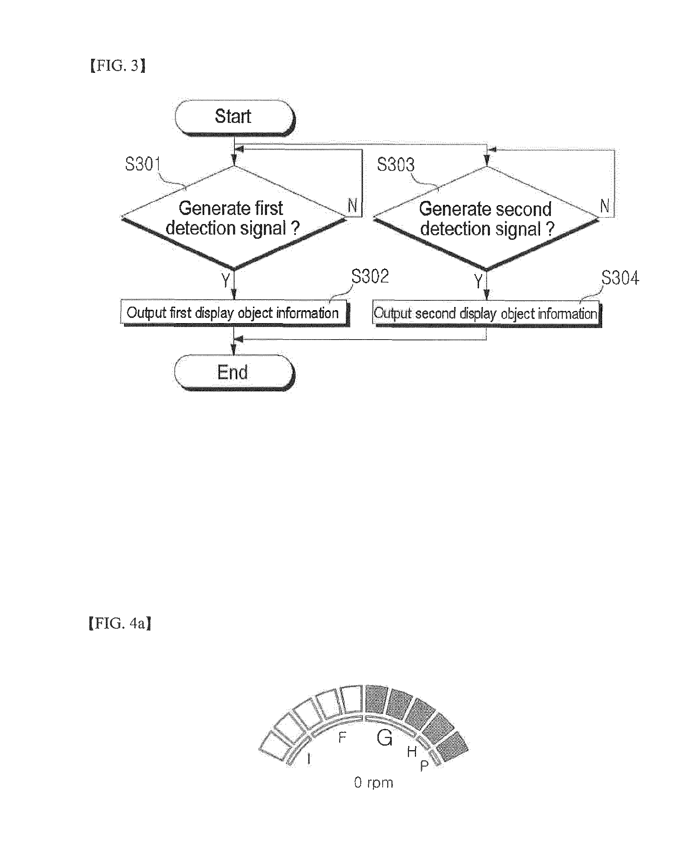

Fig. 3 is a flowchart sequentially showing the operation of the engine output display controller in accordance with the present invention.

Hereinafter, the operation of the engine output display controller in accordance with the present invention will be described with reference to Fig. 3.

As shown in Fig. 3, first, the engine output display controller of the present invention generates a first detection signal corresponding to an enable signal if the engine output display controller detects that an operator setting mode and an engine output mode are different from each other (S301).

Therefore, the engine output display controller outputs the first display object information, which enables the operator setting engine output mode information to be distinguished from permissible overall output mode information of a corresponding engine, to the screen display unit, if the first detection signal is generated (i.e., if the engine output display controller detects that the operator setting mode and the engine output mode are different from each other) (S302).

By virtue of this operation, the operator can previously identify an engine output level before the manipulation of the work apparatus by the operator.

For example, the first display object information is set such that a distinction between the respective mode information is made by using the bars having the same shape. Further, when it is assumed that the operator setting engine output mode is a five stage engine output mode and the permissible overall output mode of the corresponding engine is a total of ten stage engine output mode, the output operation of the first display control module 201 will be described hereinafter.

In other words, the engine output display controller outputs, as first display object information, information regarding the number (e.g., five) of bars which correspond to the five stage engine output mode (i.e., the operator setting engine output mode) and are to be activated, and position information (e.g., information regarding bars ranging from a first bar to a fifth bar in the right direction based on a bar positioned at the left end of the bars) and color information (e.g., colorless) of the bars, as well as information regarding the number (e.g., five) of bars which correspond to the ten stage engine output mode (i.e., the permissible overall output mode of the corresponding engine) and are to be activated, and position information (e.g., information regarding bars ranging from a sixth bar to a tenth bar in the right direction based on a bar positioned at the left end of the bars) and color information (e.g., dark red color) of the bars, to the screen display unit. In this case, matching information among the engine output stage, information regarding the number of the bars which are to be activated and the color information of the bars is previously set and stored in a memory.

Meanwhile, the screen display unit displays the operator setting engine output mode information on a screen thereof such that the operator setting engine output mode information is distinguished from permissible overall output mode information of the corresponding engine based on the first display object information when the screen display unit receives the first display object information from the engine output display controller.

As a result, the operator can previously identify an engine output level before the manipulation of the work apparatus by the operator.

In the meantime, the engine output display controller in accordance with the present invention performs a function in which the operator can previously identify an engine output level even in the case where the engine does not work for a predetermined time period and thus the operation state of the engine is converted into the idling state.

The specific operation thereof will be described hereafter.

First, the engine output display controller generates a second detection signal corresponding to an enable signal if the engine output display controller, which receives the output mode information requested by the engine and a key signal requested according to an operator's key manipulation, detects that the engine output mode is different from an operator input mode. (S303).

In other words, the engine output display controller generates a second detection signal corresponding to an enable signal if the engine output display controller receives a request for different modes in order for the engine controller to output another mode (e.g., idling mode) but not the operator setting mode to reduce fuel consumption and protect itself, without outputting the engine output mode in the same manner as the operator setting mode depending on the operator setting mode.

Subsequently, the engine output display controller outputs the first display object information, which enables the operator setting engine output mode information to be distinguished from permissible overall output mode information of the corresponding engine and the idling state mode information, to the screen display unit, if the second detection signal is generated (i.e., if the engine output display controller detects that the engine output mode is different from the operator input mode) (S304).

By virtue of this operation, the operator can previously identify an engine output level before the manipulation of the work apparatus, which is in an idling state, by the operator.

For example, the first display object information is set such that a distinction between the respective mode information is made by using the bars having the same shape. Further, when it is assumed that the operator setting engine output mode is a five stage engine output mode, the permissible overall output mode of the corresponding engine is a total of ten stage engine output mode, and the idling state mode is a one engine output mode, the output operation of the engine output display controller will be described hereinafter.

In this words, the engine output display controller outputs, as the second display object information, information regarding the number (e.g., five) of bars which correspond to the five stage engine output mode (i.e., the operator setting engine output mode) and are to be activated, and position information (e.g., information regarding bars ranging from a first bar to a fifth bar in the right direction based on a bar positioned at the left end of the bars) and color information (e.g., colorless) of the bars, as well as information regarding the number (e.g., ten) of bars which correspond to the ten stage engine output mode (i.e., the permissible overall output mode of the corresponding engine) and are to be activated, position information (e.g., information regarding bars ranging from a sixth bar to a tenth bar in the right direction based on a bar positioned at the left end of the bars) and color information (e.g., dark red color) of the bars, and information regarding the number (e.g., one) of bars which correspond to the one stage engine output mode (i.e., idling state mode) and are to be activated, and position information (e.g., information regarding a bar positioned at the left end of the bars) and color information (e.g., dark red color) of the bars, to the screen display unit.

In this case, matching information among the engine output stage, information regarding the number of the bars which are to be activated and the color information of the bars is previously set and stored in a memory.

Meanwhile, the screen display unit displays the operator setting engine output mode information on the screen thereof such that the operator setting engine output mode information is distinguished from permissible overall output mode information of the corresponding engine and the idling state mode information based on the second display object information when the screen display unit receives the second display object information from the engine output display controller.

As a result, the operator can previously identify an engine output level before the manipulation of the work apparatus, which is in an idling state, by the operator.

As described above, the engine output display controller of the present invention can control the engine output mode information set by the operator to be displayed on the screen before the operator operates a work apparatus so that the operator setting engine output mode information is distinguished from the permissible overall output mode information of the engine and the idling state mode information to allow the operator to previously identify an engine output level before the manipulation of the work apparatus by the operator.

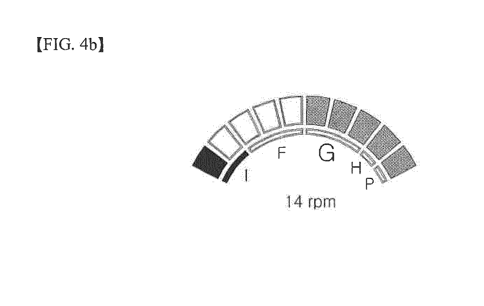

Figs. 4a and 4b are exemplary views showing a user interface (UI) for display of an engine output mode of the engine output display controller in accordance with the present invention.

More specifically, Fig. 4a is an exemplary view showing a user interface (UI) for display of an engine output mode in a start key-on state before the startup of an engine in accordance with the present invention, and Fig. 4b is an exemplary view showing a user interface (UI) for display of an engine output mode in the case where the operation state of the engine is converted into an idling state due to non-manipulation of the work apparatus by the operator in accordance with the present invention.

The example of the user interface (UI) is an example set such that a distinction between the respective mode information is made using a number of bars which have the same shape.

In addition, the example of the user interface (UI) is an example for the case where it is assumed that the operator setting engine output mode is a five stage engine output mode, the permissible overall output mode of the corresponding engine is a total of ten stage engine output mode, and the idling state mode is a one engine output mode.

As shown in Fig. 4a, in the case of a start key-on state before the startup of the engine, the operator setting engine output mode (five stage) information is displayed on the screen of the screen display unit such that the operator setting engine output mode information is distinguished from permissible overall output mode information of the corresponding engine.

In other words, the five stage engine output mode information corresponding to the operator setting engine output mode is displayed on the screen such that information regarding bars ranging from a first bar to a fifth bar in the right direction based on a bar positioned at the left end of the bars is displayed in a colorless pattern. The permissible overall output mode of the corresponding engine, which corresponds to the ten stage engine output mode information, is displayed on the screen such that information regarding bars ranging from a sixth bar to a tenth bar in the right direction based on a bar positioned at the left end of the bars is displayed in a dark red color, so that the operator setting engine output mode (five stage) information is distinguished from the permissible overall output mode of the corresponding engine.

By virtue of this operation, the operator can previously identify an engine output level (e.g., five stage) before the manipulation of the work apparatus by the operator.

On the other hand, as shown in Fig. 4b, the engine output display controller in accordance with the present invention performs a function in which the operator can previously identify an engine output level even in the case where the engine does not work for a predetermined time period and thus the operation state of the engine is converted into the idling state.

In other words, as shown in Fig. 4b, in the case where the engine does not work for a predetermined time period and thus the operation state of the engine is converted into the idling state, the operator setting engine output mode (five stage) information is displayed on the screen by the engine output display controller such that the operator setting engine output mode (five stage) information is distinguished from the permissible overall output mode of the corresponding engine and the idling state mode(one stage).

Specifically, the five stage engine output mode information corresponding to the operator setting engine output mode is displayed on the screen such that information regarding bars ranging from a second bar to a fifth bar in the right direction based on a bar positioned at the left end of the bars is displayed in a colorless pattern. The ten stage engine output mode information, which corresponds to the permissible overall output mode of the corresponding engine, is displayed on the screen such that information regarding bars ranging from a sixth bar to a tenth bar in the right direction based on a bar positioned at the left end of the bars is displayed in a dark red color. In addition, the one stage engine output mode information corresponding to the idling state mode is displayed on the screen such that a bar positioned at the left end of the bars is displayed in a dark red color to enable the operator setting engine output mode (five stage) information to be distinguished from the permissible overall output mode (ten stage) of the corresponding engine and the idling state mode (one stage).

By virtue of this operation, the operator can previously identify an engine output level (e.g., five stage in the above example) before the manipulation of the work apparatus, which is in an idling state, by the operator.

### INDUSTRIAL APPLICABILITY

In accordance with the engine output display controller and the method for displaying an engine output mode thereof of the present invention as constructed above, the engine output mode information set by the operator is controlled to be displayed on the screen before the operator operates a work apparatus so that the operator setting engine output mode information is distinguished from the permissible overall output mode information of the engine and the idling state mode information to allow the operator to previously identify an engine output level before the manipulation of the work apparatus by the operator.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A method for displaying an engine output mode of an engine output display controller connected to a screen display unit, the method comprising a step of controlling the screen display unit to display operator setting engine output mode information on a screen thereof,
wherein the controlling step controls the display operation of the screen display unit so that the operator setting engine output mode information is distinguished from permissible overall output mode information of a corresponding engine if the engine output display controller senses that an operator setting mode and an engine output mode are different from each other.

2. The method for displaying an engine output mode according to claim 1, wherein the controlling step controls the display operation of the screen display unit so that the operator setting engine output mode information is distinguished from the permissible overall output mode information of the engine and idling state mode information if the engine output display controller, which receives the output mode information requested by the engine and a key signal requested according to an operator's key manipulation, senses that the engine output mode is different from an operator input mode.

3. The method for displaying an engine output mode according to claim 1 or 2, wherein the engine output display controller makes a distinction between the respective modes using information regarding the number of bars which have the same shape and are differently activated for the respective modes, and position information and color information of the bars.

4. An engine output display controller connected to a screen display unit and configured to control the screen display unit to display operator setting engine output mode information on a screen thereof, the controller comprising:
a first display control module configured to output first display object information, which enables the operator setting engine output mode information to be distinguished from permissible overall output mode information of a corresponding engine, to the screen display unit if the first display control module senses that an operator setting mode and an engine output mode are different from each other.

5. The engine output display controller according to claim 4, further comprising a second display control module configured to output second display object information, which enables the operator setting engine output mode information to be distinguished from the permissible overall output mode information of the engine and idling state mode information, to the screen display unit if the second display control module, which receives the output mode information requested by the engine and a key signal requested according to an operator's key manipulation, senses that the engine output mode is different from an operator input mode.

6. The engine output display controller according to claim 4 or 5, wherein a distinction between the respective modes is made using information, regarding the number of bars which have the same shape and are differently activated for the respective modes, and position information and color information of the bars.
